# EUROPÄISCHE PATENTSCHRIFT

(11) **EP 1 304 553 B1**
(45) Veröffentlichungstag und Bekanntmachung des Hinweises auf die Patenterteilung: **15.03.2006**
(21) Anmeldenummer: 01124322.7
(22) Anmeldetag: 19.10.2001
(51) Int. Cl.: G01J 3/46

(54) **Verfahren und Vorrichtung zur optischen Markierung des Zielbereichs eines Farbmessgeräts auf einer Messfläche**
Method and device for the optical marking of a colorimeter target area on a measurement surface
Méthode et dispositif pour le marquage optique de la zone cible d'un colorimètre sur une surface de mesure

(43) Veröffentlichungstag der Anmeldung: 23.04.2003
(73) Patentinhaber: Gretag-Macbeth AG, 8105 Regensdorf (CH)
(72) Erfinder: Pfister, Bruno, 8172 Niederglatt (CH)
(74) Vertreter: Schwabe - Sandmair - Marx

(56) Entgegenhaltungen:
- EP-A- 0 780 671
- DE-A- 4 129 602
- US-A- 5 823 679
- PATENT ABSTRACTS OF JAPAN vol. 1999, no. 08, 30. Juni 1999 (1999-06-30) & JP 11 085395 A (SHARP CORP), 30. März 1999 (1999-03-30)
- PATENT ABSTRACTS OF JAPAN vol. 1995, no. 09, 31. Oktober 1995 (1995-10-31) & JP 07 143506 A (MATSUSHITA ELECTRIC IND CO LTD), 2. Juni 1995 (1995-06-02)
- PATENT ABSTRACTS OF JAPAN vol. 017, no. 214 (E-1357), 27. April 1993 (1993-04-27) & JP 04 351830 A (NEC HOME ELECTRON LTD), 7. Dezember 1992 (1992-12-07)

## Beschreibung

Die Erfindung betrifft ein Verfahren und eine Vorrichtung zur optischen Markierung des von einem Farbmessgerät auf einer Messfläche erfassten Zielbereichs.

Für verschiedene Anwendungen, beispielsweise etwa die Erstellung von Farbprofilen für eine rechnergesteuerte Projektionseinrichtung ("Beamer"), ist die farbmetrische Ausmessung des von der Projektionseinrichtung auf der Projektionsfläche erzeugten Bilds mittels eines für Fernmessung geeigneten Farbmessgeräts erforderlich. Dazu muss das Farbmessgerät zielgenau auf die zu messenden Bereiche der Messfläche ausgerichtet werden können. Diese Ausrichtung auf den auszumessenden Messbereich erfolgt heute üblicherweise mittels spezieller Visiereinrichtungen wie zum Beispiel Laser-Pointer, Kameras etc..

Durch die vorliegende Erfindung soll eine alternative Möglichkeit zur Ausrichtung eines Farbmessgeräts geschaffen werden, welche ohne solche speziellen Visiereinrichtungen auskommt.

Die Lösung dieser der Erfindung zugrundeliegenden Aufgabe ergibt sich aus den im kennzeichnenden Teil des unabhängigen Anspruchs 1 bzw. des unabhängigen Anspruchs 5 beschriebenen Merkmalen. Besonders vorteilhafte Ausgestaltungen und Weiterbildungen sind Gegenstand der abhängigen Ansprüche.

Im folgenden wird die Erfindung anhand der Zeichnung näher erläutert. Es zeigen:
- Fig. 1: eine Prinzipskizze der erfindungsgemässen Vorrichtung,
- Fig. 2: ein Beispiel für ein im erfindungsgemässen Verfahren typischerweise verwendetes Farbmuster.

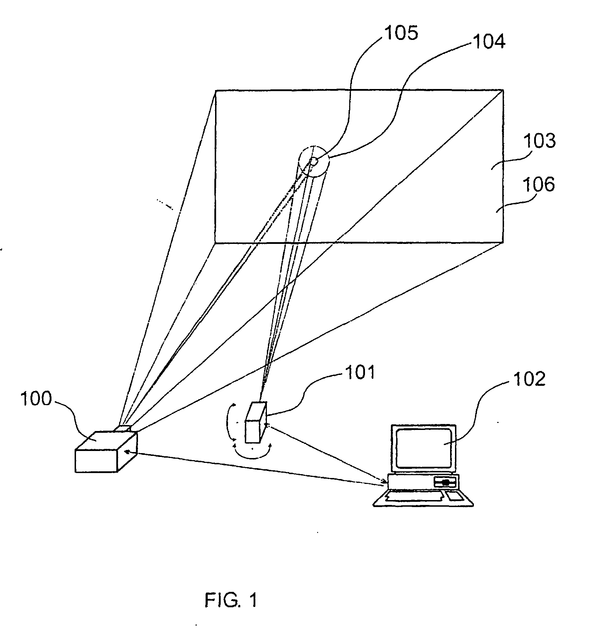

Die in Fig. 1 dargestellte Vorrichtung umfasst ein für Fernmessung geeignetes, an sich herkömmliches Farbmessgerät 101, einen Rechner 102 und eine vom Rechner gesteuerte elektronische Anzeigeeinrichtung in Form einer Projektionseinrichtung ("Beamer") 100. Soweit entspricht die Vorrichtung einer klassischen Konfiguration, wie sie typischerweise für die Erstellung eines Farbprofils für die Projektionseinrichtung verwendet wird. Das Farbmessgerät 101 erfasst dabei einen Ziel- oder Messbereich 104 auf einer Projektions- oder Messfläche 103 und liefert die Farbmesswerte (z.B. Farbkoordinaten) des Zielbereichs an den Rechner 102 zur weiteren Verarbeitung. Das Farbmessgerät 101 ist um zwei Achsen schwenkbar, so dass der Zielbereich 104 über die gesamte Messfläche 103 geführt werden kann.

Das im folgenden näher beschriebene erfindungsgemässe Verfahren dient dazu, den vom Farbmessgerät 101 erfassten Zielbereich 104 optisch auf der Messfläche zu markieren, so dass der Benutzer erkennen kann, auf welche Stelle der Messfläche 103 das Farbmessgerät 101 im Augenblick gerichtet ist, so dass das Farbmessgerät einfach und zielsicher auf den gewünschten Messort eingestellt werden kann.

Gemäss dem wesentlichsten Aspekt der Erfindung wird dazu im Rechner 102 ein spezielles zweidimensionales Farbmuster 106 erzeugt und mittels der Projektionseinrichtung 100 auf der Messfläche 103 dargestellt. Das Farbmuster 106 ist so aufgebaut, dass es an jeder Stelle seiner zweidimensionalen Erstreckung eine insgesamt nur einmal vorkommende, also einmalige Farbe aufweist. Somit besteht also eine eindeutige Zuordnung zwischen der Farbe einer Stelle und der Lage der betreffenden Stelle auf dem Farbmuster 106. Vorzugsweise weist das Farbmuster 106 im wesentlichen etwa dieselbe Grösse wie die von der Projektionseinrichtung 100 überstrichene Messfläche 103 auf.

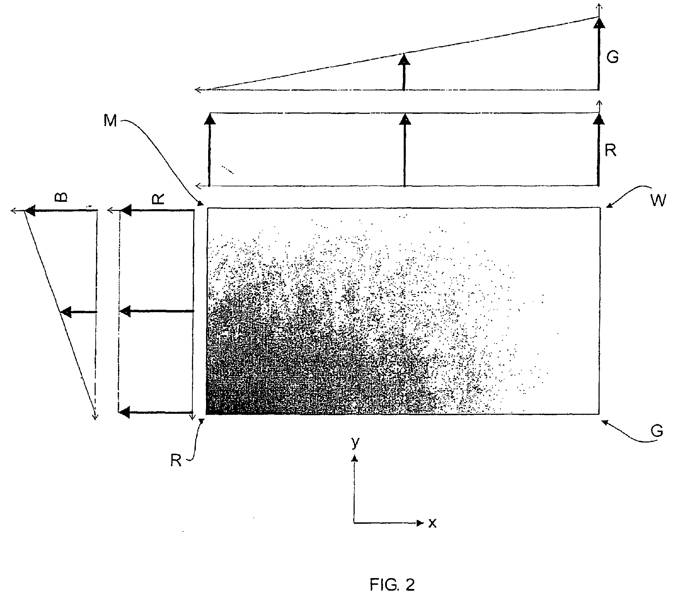

Die Figur 2 zeigt ein typisches Farbmuster 106, wie es für die Zwecke der Erfindung einsetzbar ist. Die vier Begrenzungskanten des hier rechteckigen Farbmusters 106 liegen paarweise parallel bzw. senkrecht zu den Achsen x und y eines Ortskoordinatensystems. Die vier Eckpunkte R, M, W und G des Farbmusters 106 weisen die Farben Rot (R), Magenta (M), Weiss (W) und Gelb (G) auf. Parallel zur y-Achse nimmt der Blauanteil nach oben linear von null (unten) bis zu einem Nominalwert (oben) zu. In analoger Weise nimmt parallel zur x-Achse der Grünanteil nach rechts linear von null (links) bis zu einem Nominalwert (rechts) zu. Der Rotanteil ist über das gesamte Farbmuster konstant auf einem Nominalwert, wobei die Nominalwerte der drei Farben Rot, Blau und Grün so auf einander abgestimmt sind, dass die Überlagerung der Nominalwerte der drei Farben die Farbe Weiss ergibt. Entsprechend ergibt die Überlagerung von Rot und Blau die Farbe Magenta und die Überlagerung von Rot und Grün die Farbe Gelb.

Wie man leicht erkennt, weist also jede Stelle des Farbmusters 106 eine andere, einmalige Farbe auf. Umgekehrt gehört zu jeder einmal vorkommenden Farbe des Farbmusters 106 ein spezifisches (Orts-)Koordinatenpaar, das die (relative) Lage der betreffenden Stelle des Farbmusters auf dem Farbmuster 106 beschreibt.

Die Erzeugung des Farbmusters 106 im Rechner 102 kann mit praktisch jeder beliebigen farbtauglichen Grafik-Software auf herkömmliche Weise erfolgen. Der Fachmann bedarf diesbezüglich keiner näheren Erläuterung.

Es versteht sich, dass für die Zwecke der Erfindung der Verlauf der Farben im Farbmuster 106 nicht unbedingt kontinuierlich (analog) sein muss, sondern auch in mehr oder weniger kleinen Schritten diskret abgestuft sein kann. Eine minimale Diskretisierung ist ohnehin durch die Auflösung der Projektionseinrichtung und die im Rechner 102 laufende Farbdarstellungssoftware bedingt.

Das Farbmessgerät 101 ist zu Beginn des Verfahrens vorzugsweise aber nicht notwendigerweise so (vor-)ausgerichtet, dass sich der von ihm erfasste Zielbereich 104 (an beliebiger Stelle) innerhalb der Messfläche 103 befindet. Eine solche Vor- bzw. Grobausrichtung lässt sich im allgemeinen leicht erreichen. Sie ist aber, wie aus dem folgenden erhellt, nicht unbedingt erforderlich, wenn der Rechner 102 so programmiert ist, dass eine anfängliche Fehlausrichtung des Farbmessgeräts 101 (Zielbereich ausserhalb des von der Projektionseinrichtung 100 überstrichenen Projektionsfelds oder ausserhalb des Farbmusters 106, wenn dieses kleiner als das Projektionsfeld ist) erkannt und gemeldet wird. Dies kann beispielsweise sehr einfach durch logische Auswertung der gemessenen Farbwerte erfolgen.

Nun wird als erstes eine Dunkelmessung mit dem Farbmessgerät 101 vorgenommen, d.h. die Projektionseinrichtung 100 erhält vom Rechner 102 kein Helligkeitssignal und projiziert demzufolge kein Bild auf die Messfläche 103. Die dabei ermittelten Dunkelmesswerte werden dem Rechner 102 zugeführt und in diesem für die an sich bekannte Dunkelwertkorrektur der später ermittelten eigentlichen Messwerte gespeichert.

Anschliessend werden über den Rechner 102 und die Projektionseinrichtung 100 hintereinander (über das gesamte Messfeld) die Nominalwerte der Farben Gelb (100% Rot, 100% Grün, 0% Blau) und Magenta (100% Rot, 0% Grün, 100% Blau) dargestellt und mittels des Farbmessgeräts gemessen. Die dabei ermittelten Farbmesswerte liefern nach Abzug der Dunkelmesswerte die den Nominalwerten der drei Grundfarben Rot, Blau und Grün entsprechenden Nominalmesswerte dieser drei Farben.

Da der Rechner weiss, welche Farbe gerade dargestellt wird und welche Messwerte er somit vom Farbmessgerät erwarten kann, kann er einfach feststellen, ob das Farbmessgerät auf die Messfläche ausgerichtet ist oder nicht und dies dem Benutzer ggf. in geeigneter Form signalisieren, so dass dieser die Grob-Ausrichtung des Farbmessgeräts nötigenfalls korrigiert. Die Dunkelmessung und die Darstellung der beiden Farben Gelb und Magenta wird dann solange wiederholt, bis das Farbmessgerät passend ausgerichtet ist und die drei Grundfarben Rot, Blau und Grün eindeutig erkannt wurden.

Jetzt wird das Farbmuster 106 auf der Messfläche 103 dargestellt und mittels des Farbmessgeräts 101 an der durch den aktuellen Zielbereich 104 gegebenen Stelle ausgemessen. Die dabei ermittelten Farbwerte enthalten je nach Position des Zielbereichs 104 verschieden grosse Rot-, Grün- und Blauanteile. Aus den (auf die jeweiligen Nominalmesswerte bezogenen prozentualen) Anteilen der drei Farben Rot, Grün und Blau werden nun im Rechner 102 die (relativen und auf die Abmessungen des Farbmusters normierten) Koordinaten x und y (des Mittelpunkts) des Zielbereichs 104 gemäss nachstehenden Formeln berechnet:
X = Verhältnis Grün-Anteil / Rot-Anteil
Y = Verhältnis Blau-Anteil / Rot-Anteil

Genau genommen misst das Farbmessgerät 101 nicht die Farbe eines Punkts, sondern aufgrund der endlichen Ausdehnung seines Zielbereichs (Erfassungsbereichs) 104 den Mittelwert der Farbe über den Zielbereich. Bei geeignetem Aufbau des Farbmusters 106, beispielsweise etwa so wie vorstehend beschrieben, spielt dies aber keine nennenswerte Rolle. Als Messstelle wird der (in der optischen Achse des Farbmessgeräts liegende) Mittelpunkt des Zielbereichs definiert.

Im nächsten Schritt des erfindungsgemässen Verfahrens wird vom Rechner 102 eine optische Markierung 105 erzeugt und anhand der zuvor ermittelten Koordinaten x und y so in das Farbmuster 106 eingeblendet, dass sie genau zentrisch zum Mittelpunkt des Zielbereichs 104 des Farbmessgeräts 101 auf der Messfläche dargestellt wird. Diese optische Markierung 105 kann z.B. die Form eines kleinen schwarzen Kreisrings oder eines Fadenkreuzes aufweisen. Aussehen und Position der Markierung 105 werden wiederum in an sich bekannter Weise mittels der auf dem Rechner 102 laufenden Grafik-Software erzeugt.

Anhand der so erzeugten optischen Markierung 105 kann der Benutzer visuell erkennen, auf welche Stelle der Messfläche 103 das Farbmessgerät 101 gerichtet ist. Wenn die Ausrichtung des Farbmessgeräts 101 geändert wird, wird der neue Zielbereich sofort wieder durch die neu berechnete und auf der Messfläche dargestellte optische neue Markierung kenntlich gemacht. Für die spätere Verwendung der ganzen Konfiguration kann so der Benutzer das Farbmessgerät 101 sehr einfach und zielgenau auf den gewünschten Messort auf der Messfläche 103 ausrichten.

Die Erfindung ist keineswegs auf Farbmuster der in Fig. 2 beispielsweise beschriebenen Art beschränkt. Es können auch Farbmuster ohne Gradienten verwendet werden, solange nur eine eindeutige Zuordnung zwischen Koordinaten und Farben gewährleistet ist.

Ferner ist die Erfindung auch nicht auf Projektionseinrichtungen ("Beamer") beschränkt. Sie kann auch im Zusammenhang mit anderen grossflächigen elektronisch steuerbaren Anzeigeeinrichtungen wie z.B. grossen Leuchtdioden-Anzeigetafeln, grossen Bildschirm-Anzeigen etc. verwendet werden. Die Messfläche ist in diesen Fällen die Anzeigefläche der Anzeigetafeln bzw. der Bildschirme.

Mit dem erfindungsgemässen Verfahren und der erfindungsgemässen Vorrichtung ist eine einfache und zielgenaue Ausrichtung des Farbgeräts ohne zusätzliche Hilfsmittel wie z.B. Laser-Pointer oder Kameras und dgl. möglich.

## Patentansprüche

1. Verfahren zur optischen Markierung des von einem Farbmessgerät (101) auf einer Messfläche (103) erfassten Zielbereichs (104), **dadurch gekennzeichnet, dass** auf der Messfläche (103) ein zweidimensionale Farbmuster (106) dargestellt wird, welches in jedem Punkt einen einmaligen eindeutigen Farbwert aufweist, dass das Farbmessgerät (101) auf die Messfläche (103) gerichtet wird und der Farbwert des vom Farbmessgerät erfassten Zielbereichs (104) gemessen wird, dass aus dem gemessenen Farbwert die örtlichen Koordinaten des Zielbereichs (104) auf der Messfläche (103) berechnet werden, und dass an dem durch die berechneten Koordinaten des Zielbereichs gegebenen Ort der Messfläche (103) eine optische Marke (105) dargestellt wird, welche die Lage des Zielbereichs (104) auf der Messfläche (103) visualisiert.

2. Verfahren nach Anspruch 1, **dadurch gekennzeichnet, dass** das Farbmuster (106) von einem Rechner (102) erzeugt und mittels einer vom Rechner gesteuerten Anzeigeeinrichtung (100), insbesondere einer Projektionseinrichtung auf der Messfläche (103) dargestellt wird.

3. Verfahren nach Anspruch 2, **dadurch gekennzeichnet, dass** das Farbmessgerät (101) an den Rechner (102) angeschlossen ist und dass die Berechnung der Koordinaten des Zielbereichs (103) aus dem vom Farbmessgerät (101) gemessenen Farbwert vom Rechner (102) durchgeführt wird.

4. Verfahren nach Anspruch 3, **dadurch gekennzeichnet, dass** Form und Lage der optischen Marke (105) durch den Rechner (102) festgelegt werden und dass die Marke (105) durch den Rechner (102) über die von ihm gesteuerte Anzeigeeinrichtung (100) auf der Messfläche (103) dargestellt wird.

5. Vorrichtung zur optischen Markierung des von einem Farbmessgerät (101) auf einer Messfläche (103) erfassten Zielbereichs (104), mit einem mit dem Farbmessgerät (101) verbundenen Rechner (102) und einer vom Rechner angesteuerten Anzeigeeinrichtung (100), **dadurch gekennzeichnet, dass** der Rechner (102) dazu eingerichtet ist, ein zweidimensionale Farbmuster (106), welches an jeder Stelle einen einmaligen eindeutigen Farbwert aufweist, zu erzeugen und über die Anzeigeeinrichtung (100) auf der Messfläche (103) darzustellen, dass der Rechner (102) ferner dazu eingerichtet ist, aus dem vom Farbmessgerät (101) gemessenen Farbwert des Zielbereichs (103) des Farbmessgeräts und dem Aufbau des Farbmusters (106) die Koordinaten (x,y) des Zielbereichs (104) auf der Messfläche (103) zu berechnen, und dass der Rechner (102) dazu eingerichtet ist, anhand der berechneten Koordinaten (x,y) eine optische Marke (105) zu berechnen und über die Anzeigeeinrichtung (100) am Ort des Zielbereichs (104) auf der Messfläche (103) darzustellen.

6. Vorrichtung nach Anspruch 5, **dadurch gekennzeichnet, dass** die Anzeigeeinrichtung (100) eine elektronisch steuerbare Projektionseinrichtung ist.

## Claims

1. Method for the optical marking of the target area (104) detected by a colour measuring device (101) on a measurement surface (103), **characterized in that** a two-dimensional colour pattern (106) is displayed on the measurement surface (103), said colour pattern having a one-off unique colour value at each point, **in that** the colour measuring device (101) is directed toward the measurement surface (103) and the colour value of the target area (104) detected by the colour measuring device is measured, **in that** the spatial coordinates of the target area (104) on the measurement surface (103) are calculated from the measured colour value, and **in that** an optical marker (105) is displayed at the location on the measurement surface (103) defined by the calculated coordinates of the target area, said optical marker visualizing the position of the target area (104) on the measurement surface (103).

2. Method according to Claim 1, **characterized in that** the colour pattern (106) is produced by a computer (102) and is displayed on the measurement surface (103) by means of a display device (100) controlled by the computer, in particular a projection device.

3. Method according to Claim 2, **characterized in that** the colour measuring device (101) is connected to the computer (102), and **in that** the calculation of the coordinates of the target area (103) is carried out by the computer (102) from the colour value measured by the colour measuring device (101).

4. Method according to Claim 3, **characterized in that** the shape and position of the optical marker (105) are determined by the computer (102), and **in that** the marker (105) is displayed on the measurement surface (103) by the computer (102) via the display device (100) controlled by the latter.

5. Device for the optical marking of the target area (104) detected by a colour measuring device (101) on a measurement surface (103), comprising a computer (102) connected to the colour measuring device (101) and a display device (100) controlled by the computer, **characterized in that** the computer (102) is designed to produce a two-dimensional colour pattern (106) which has a one-off unique colour value at each point, and to display it on the measurement surface (103) via the display device (100), **in that** the computer (102) is furthermore designed to calculate the coordinates (x,y) of the target area (104) on the measurement surface (103) from the colour value of the target area (103) of the colour measuring device which is measured by the colour measuring device (101) and from the design of the colour pattern (106), and **in that** the computer (102) is designed to calculate an optical marker (105) on the basis of the calculated coordinates (x,y) and to display it at the location of the target area (104) on the measurement surface (103) via the display device (100).

6. Device according to Claim 5, **characterized in that** the display device (100) is an electronically controllable projection device.

## Revendications

1. Procédé de repérage optique d'une zone cible (104) analysée sur une surface de mesure (103) par un colorimètre (101), **caractérisé en ce que** sur la surface de mesure (103) est représenté un motif de couleurs bidimensionnel (106) qui présente en chaque point une valeur colorimétrique unique et univoque, **en ce que** le colorimètre (101) est dirigé sur la surface de mesure (103) et la valeur colorimétrique de la zone cible (104) analysée par le colorimètre est mesurée, **en ce que** les coordonnées locales de la zone cible (104) sur la surface de mesure (103) sont calculées à partir de la valeur colorimétrique mesurée, et **en ce qu'**à l'endroit de la surface de mesure (103) indiqué par les coordonnées calculées de la zone cible est représenté un repère optique (105) qui visualise la position de la zone cible (104) sur la surface de mesure (103).

2. Procédé selon la revendication 1, **caractérisé en ce que** le motif de couleurs est produit par un calculateur (102) et est représenté sur la surface de mesure (103) au moyen d'un dispositif d'affichage (100), en particulier un dispositif de projection, commandé par le calculateur.

3. Procédé selon la revendication 2, **caractérisé en ce que** le colorimètre (101) est raccordé au calculateur (102) et **en ce que** le calcul des coordonnées de la zone cible (103) à partir de la valeur colorimétrique mesurée par le colorimètre (101) est effectué par le calculateur (102).

4. Procédé selon la revendication 3, **caractérisé en ce que** la forme et la position du repère optique (105) sont fixées par le calculateur (102) et **en ce que** le repère (105) est représenté sur la surface de mesure (103) par le calculateur par l'intermédiaire du dispositif d'affichage (100) commandé par lui.

5. Dispositif de repérage optique d'une zone cible (104) analysée sur une surface de mesure (103) par un colorimètre (101), avec un calculateur (102) relié au colorimètre (101) et un dispositif d'affichage (100) commandé par le calculateur, **caractérisé en ce que** le calculateur (102) est organisé pour produire un motif de couleurs bidimensionnel (106) qui présente en chaque endroit une valeur colorimétrique unique et univoque, et pour le représenter sur la surface de mesure (103) par l'intermédiaire du dispositif d'affichage, **en ce que** le calculateur (102) est de plus agencé pour, à partir de la valeur colorimétrique de la zone cible (103) mesurée par le colorimètre (101) et de la constitution du motif de couleurs (106), calculer les coordonnées (x, y) de la zone cible (104) sur la surface de mesure (103), et **en ce que** le calculateur (102) est organisé pour calculer à l'aide des coordonnées (x, y) un repère optique (105) et le représenter sur le lieu de la zone cible (104) sur la surface de mesure (103) par l'intermédiaire du dispositif d'affichage (100).

6. Dispositif selon la revendication 5, **caractérisé en ce que** le dispositif d'affichage (100) est un dispositif de projection pouvant être commandé électroniquement.
